# EUROPEAN PATENT APPLICATION

(11) **EP 2 842 664 A1**
(43) Date of publication of application: **04.03.2015**
(21) Application number: 13780557.8
(22) Date of filing: 22.04.2013
(51) Int. Cl.: B22F 3/02, B22F 3/03, B22F 7/06, B30B 11/02, H01F 1/22, H01F 41/02

(54) **DEVICE FOR HIGH-DENSITY MOLDING AND METHOD FOR HIGH-DENSITY MOLDING OF MIXED POWDER, AND HIGH-DENSITY THREE-LAYER-STRUCTURED POWDER COMPACT**

(30) Priority: 23.04.2012 JP 2012098061
(71) Applicant: Aida Engineering, Ltd., Sagamihara-shi, Kanagawa 252-5181 (JP)
(72) Inventor: HASEGAWA, Kazuhiro, Sagamihara-shi Kanagawa 252-5181 (JP); HIRAI, Yoshiki, Sagamihara-shi Kanagawa 252-5181 (JP)
(74) Representative: MERH-IP Matias Erny Reichl Hoffmann
(86) International application number: PCT/JP2013/061742
(87) International publication number: WO 2013/161747

(57) **Abstract**

A first die (21D) is sequentially filled with a first-layer mixed powder (100F) that is a mixture of a basic metal powder having a small particle size and a low-melting-point lubricant powder, a second-layer mixed powder (100S) that is a mixture of the basic metal powder having a large particle size and the low-melting-point lubricant powder, and a third-layer mixed powder (100T) that is a mixture of the basic metal powder having a small particle size and the low-melting-point lubricant powder. A first pressure is applied to each mixed powder to form an intermediate green compact (110). The intermediate green compact (110) is heated, and placed in a second die (41D). A second pressure is applied to the intermediate green compact (110) to form a high-density three-layer green compact.

## Description

### TECHNICAL FIELD

The present invention relates to a high-density molding method and a high-density molding system that can form a green compact having high density (e.g., 7.75 g/cm³) by pressing a mixed powder twice, and also relates to a high-density three-layer green compact.

### BACKGROUND ART

Powder metallurgy is a technique that normally presses (compresses) a metal powder to form a green compact having a given shape, and heats the green compact to a temperature around the melting point of the metal powder to promote intergranular coupling (solidification) (i.e., sintering process). This makes it possible to inexpensively produce a mechanical part that has a complex shape and high dimensional accuracy.

An improvement in mechanical strength of a green compact has been desired in order to deal with a demand for a further reduction in size and weight of mechanical parts. When a green compact is subjected to a high temperature, the magnetic properties of the green compact may deteriorate. Therefore, the subsequent high-temperature treatment (sintering process) may be omitted when producing a magnetic-core green compact, for example. In other words, a method that improves mechanical strength without performing a high-temperature treatment (sintering process) has been desired.

The mechanical strength of a green compact increases significantly (hyperbolically) as the density of the green compact increases. For example, a method that mixes a lubricant into a metal powder, and press-molds the metal powder while achieving a reduction in friction resistance has been proposed as a typical high-density molding method (e.g., JP-A-1-219101 (Patent Literature 1)). A mixed powder prepared by mixing a lubricant with a basic metal powder in a ratio of about 1 wt% is normally press-molded. Various other methods have been proposed to achieve higher density. These methods can be roughly classified into a method that improves the lubricant and a method that improves the press molding/sintering process.

Examples of the method that improves the lubricant include a method that utilizes a composite of carbon molecules obtained by combining a ball-like carbon molecule with a sheet-like carbon molecule as the lubricant (e.g., JP-A-2009-280908 (Patent Literature 2)), and a method that utilizes a lubricant having a penetration at 25°C of 0.3 to 10 mm (e.g., JP-A-2010-37632 (Patent Literature 3)). These methods aim at reducing the friction resistance between the metal powder particles, and the friction resistance between the metal powder and a die.

Examples of the method that improves the press molding/sintering process include a warm molding/sinter powder metallurgical technique (e.g., JP-A-2-156002 (Patent Literature 4)), a facilitated handling warm molding powder metallurgical technique (e.g., JP-A-2000-87104 (Patent Literature 5)), a double press/double sinter powder metallurgical technique (e.g., JP-A-4-231404 (Patent Literature 6)), and a single press/sinter powder metallurgical technique (e.g., JP-A-2001-181701 (Patent Literature 7)).

According to the warm molding/sinter powder metallurgical technique, a metal powder into which a solid lubricant and a liquid lubricant are mixed is pre-heated to melt part or the entirety of the lubricant, and disperse the lubricant between the metal powder particles. This technique thus reduces the inter-particle friction resistance and the friction resistance between the particles and a die to improve formability. According to the facilitated handling warm molding powder metallurgical technique, a mixed powder is pressed before performing a warm molding step to form a primary molded body having low density (e.g., density ratio: less than 76%) that allows handling (primary molding step), and the primary formed body is subjected to a secondary molding step at a temperature lower than the temperature at which blue shortness occurs while breaking the primary molded body to obtain a secondary molded body (green compact).

According to the double press/double sinter powder metallurgical technique, an iron powder mixture that contains an alloying component is compressed in a die to obtain a compressed body (green compact), the compressed body (green compact) is presintered at 870°C for 5 minutes, and compressed to obtain a presintered body, and the presintered body is sintered at 1000°C for 5 minutes to obtain a sintered body (part). According to the single press/sinter powder metallurgical technique, a die is pre-heated, and a lubricant is caused to electrically adhere to the inner side of the die. The die is filled with a heated iron-based powder mixture (iron-based powder+lubricant powder), and the powder mixture is press-molded at a given temperature to obtain an iron-based powder molded body. The iron-based powder molded body is sintered, and subjected to bright quenching and annealing to obtain an iron-based sintered body.

The density of the green compact achieved by the methods that improve the lubricant and the methods that improve the press molding/sintering process is about 7.4 g/cm³ (94% of the true density) at a maximum. The green compact exhibits insufficient mechanical strength when the density of the green compact is 7.4 g/cm³ or less. Since oxidation proceeds corresponding to the temperature and the time when applying the sintering process (high-temperature atmosphere), the lubricant coated with the powder particles burns, and a residue occurs, whereby the quality of the green compact obtained by press molding deteriorates. Therefore, it is considered that the density of the green compact is 7.3 g/cm³ or less. The methods that improve the lubricant and the methods that improve the press molding/sintering process are complex, may increase cost, and have a problem in that handling of the material is difficult or troublesome (i.e., it may be impractical).

In particular, when producing a magnetic core for an electromechanical device (e.g., motor or transformer) using a green compact, a satisfactory magnetic core may not be produced when the density of the green compact is 7.3 g/cm³ or less. It is necessary to further increase the density of a green compact in order to reduce loss (iron loss and hysteresis loss), and increase magnetic flux density (see the document presented by Toyota Central R & D Labs., Inc. in Autumn Meeting of Japan Society of Powder and Powder Metallurgy, 2009). Even when the density of the magnetic core is 7.5 g/cm³, for example, the magnetic properties and the mechanical strength of the magnetic core may be insufficient in practice.

A double molding/single sinter (anneal) powder metallurgical technique (e.g., JP-A-2002-343657 (Patent Literature 8)) has been proposed as a method for producing a magnetic-core green compact. This powder metallurgical technique is based on the fact that a magnetic metal powder that is coated with a coating that contains a silicone resin and a pigment does not show a decrease in insulating properties even if the magnetic metal powder is subjected to a high-temperature treatment. Specifically, a dust core is produced by pre-molding a magnetic metal powder that is coated with a coating that contains a silicone resin and a pigment to obtain a pre-molded body, subjecting the pre-molded body to a heat treatment at 500°C or more to obtain a heat-treated body, and compression-molding the heat-treated body. If the heat treatment temperature is less than 500°C, breakage may occur during compression molding. If the heat treatment temperature is more than 1000°C, the insulating coating may be decomposed (i.e., the insulating properties may be impaired). Therefore, the heat treatment temperature is set to 500 to 1000°C. The high-temperature treatment is performed under vacuum, an inert gas atmosphere, or a reducing gas atmosphere in order to prevent oxidation of the pre-molded body. A dust core having a true density of 98% (7.7 g/cm³) may be produced as described above.

### SUMMARY OF THE INVENTION

### TECHNICAL PROBLEM

However, the double molding/single sinter powder metallurgical technique (Patent Literature 8) is very complex, individualized, and difficult to implement as compared with the other techniques, and significantly increases the production cost. The double molding/single sinter powder metallurgical technique subjects the pre-molded body to a heat treatment at 500°C or more. The heat treatment is performed under such an atmosphere in order to prevent a situation in which the quality of the dust core deteriorates. Therefore, the double molding/single sinter powder metallurgical technique is not suitable for mass production. In particular, when using a vitreous film-coated magnetic metal powder, the vitreous material may be modified/melted.

The above methods and systems (Patent Literatures 1 to 8) can implement a sintering process at a relatively high temperature. However, the details of the press molding step achieved using the above methods and systems are unclear. Moreover, attempts to achieve a further improvement in connection with the specification and the functions of the press molding device, the relationship between pressure and density, and an analysis of the limitations thereof, have not been made.

As described above, a further increase in mechanical strength has been desired along with a reduction in size and weight of mechanical parts and the like, and there is an urgent need to develop a method and a system that can reliably, stably, and inexpensively produce a high-density green compact (particularly a magnetic-core high-density green compact). Moreover, provision of a high-quality green compact has been desired.

An object of the invention is to provide a mixed powder high-density molding method and a mixed powder high-density molding system that can produce a high-density green compact while significantly reducing the production cost by press-molding a mixed powder twice with a heating step interposed therebetween, and also provide a high-density three-layer green compact.

### SOLUTION TO PROBLEM

A green compact has been normally produced by a powder metallurgical technique, and subjected to a sintering process performed at a high temperature (e.g., 800°C or more). However, such a high-temperature sintering process consumes a large amount of energy (i.e., increases cost), and is not desirable from the viewpoint of environmental protection.

The press molding process molds a mixed powder to have a specific shape, and has been considered to be a mechanical process that is performed in the preceding stage of the high-temperature sintering process. The high-temperature sintering process is exceptionally omitted when producing a magnetic-core green compact used for an electromagnetic device (e.g., motor or transformer). This aims at preventing a deterioration in magnetic properties that may occur when the green compact is subjected to a high-temperature process. Specifically, the resulting product inevitably has unsatisfactory mechanical strength. Since the density of the product is insufficient when mechanical strength is insufficient, the product also has insufficient magnetic properties.

It is possible to significantly promote industrial utilization and widespread use of a green compact if a high-density green compact can be formed only by the press molding process without performing the high-temperature sintering process. In order to achieve the above objective, it is necessary to take account of practical technical matters, and solve the problems thereof. In particular, a high-density green compact produced by only a press molding process is normally subjected to a mechanical post-treatment (e.g., deburring or chamfering) before use. Therefore, it is necessary to minimize (prevent) the amount of basic metal particles removed during the mechanical post-treatment to provide a high-quality product.

The invention was conceived to based on studies of the effectiveness of a lubricant during pressing, the compression limit when using a lubricant powder, the spatial distribution of a lubricant powder in a mixed powder, the spatial distribution of a basic metal powder and a lubricant powder, the behavior of a basic metal powder and a lubricant powder, and the final disposition state of a lubricant, so that a high-quality green compact that makes it possible to minimize the amount of basic metal particles removed during the mechanical post-treatment may be reliably produced. The invention was also conceived based on analysis of the characteristics (e.g., compression limit) of a normal press molding device, and the effects of the density of a green compact on strength and magnetic properties.

Specifically, the invention may provide a method that fills a first die sequentially with a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder, molds an intermediate green compact by performing a first press molding step while maintaining the lubricant in a powdery state, liquefies the lubricant by heating to change the state of the lubricant in the intermediate green compact, and molds a high-density final green compact having a density close to the true density by performing a second press molding step. In other words, the invention may provide a novel powder metallurgical technique (i.e., a powder metallurgical technique that performs two press molding steps with a lubricant liquefaction step interposed therebetween) that differs from a known powder metallurgical technique that necessarily requires a high-temperature sintering process, and may provide an epoch-making and practical method and system that can reliably and stably produce a high-density green compact at low cost, as well as a high-density three-layer green compact produced using the method and the system.
(1) According to a first aspect of the invention, a mixed powder high-density molding method includes:
   filling a first die sequentially with a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder;
   applying a first pressure to the third-layer mixed powder, the second-layer mixed powder, and the first-layer mixed powder in the first die to form a mixed powder intermediate green compact;
   heating the mixed powder intermediate green compact removed from the first die to the melting point of the lubricant powder;
   placing the heated mixed powder intermediate green compact in a second die; and
   applying a second pressure to the mixed powder intermediate green compact in the second die to form a high-density mixed powder final green compact.
(2) In the mixed powder high-density molding method as defined in (1), the particle size of the basic metal powder included in the first-layer mixed powder, the second-layer mixed powder, and the third-layer mixed powder may be specified by an average particle size.
(3) In the mixed powder high-density molding method as defined in (1), the maximum particle size of the first-layer mixed powder and the maximum particle size of the third-layer mixed powder may be larger than the minimum particle size of the second-layer mixed powder.
(4) In the mixed powder high-density molding method as defined in (1), the maximum particle size of the first-layer mixed powder and the maximum particle size of the third-layer mixed powder may be larger than the average particle size of the second-layer mixed powder.
(5) In the mixed powder high-density molding method as defined in (1) or (2), the first-layer mixed powder and the third-layer mixed powder may include the basic metal powder having a particle size selected from 20 to 120 micrometers, and the second-layer mixed powder may include the basic metal powder having a particle size selected from 20 to 400 micrometers.
(6) In the mixed powder high-density molding method as defined in (1) or (2), the first-layer mixed powder and the third-layer mixed powder may be an identical mixed powder.
(7) In the mixed powder high-density molding method as defined in (1) or (2), the lubricant powder may have a low melting point within the range of 90 to 190°C.
(8) In the mixed powder high-density molding method as defined in (1) or (2), the second die may be pre-heated to the melting point before the mixed powder intermediate green compact is placed in the second die.
(9) In the mixed powder high-density molding method as defined in (1) or (2), the second pressure may be selected to be equal to the first pressure.
(10) According to a second aspect of the invention, a mixed powder high-density molding system includes:
   a mixed powder feeding device that can externally and sequentially feed a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder ;
   a first press molding device that applies a first pressure to the third-layer mixed powder, the second-layer mixed powder, and the first-layer mixed powder, with which a first die has been filled using the mixed powder feeding device, to form a mixed powder intermediate green compact;
   a heating device that heats the mixed powder intermediate green compact removed from the first die to the melting point of the lubricant powder; and
   a second press molding device that applies a second pressure to the mixed powder intermediate green compact that is placed in a second die to form a high-density mixed powder final green compact.
(11) In the mixed powder high-density molding system as defined in (10), the heating device and the second press molding device may be formed by a heating/press molding device that functions as the heating device and the second press molding device, the heating/press molding device may include a plurality of heating/press molding sub-devices, and each of the plurality of heating/press molding sub-devices may be selectively and sequentially operated in each cycle.
(12) The mixed powder high-density molding system as defined in (10) may further include a pre-heating device that pre-heats the second die.
(13) The mixed powder high-density molding system as defined in (10) may further include a workpiece transfer device that transfers the mixed powder intermediate compressed body formed by the first press molding device to the heating device, transfers the mixed powder intermediate compressed body heated by the heating device to the second press molding device, and transfers the mixed powder final compressed body formed by the second press molding device to a discharge section.
(14) According to a third aspect of the invention, a high-density three-layer green compact is produced by sequentially placing a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder, and integrally molding the first-layer mixed powder, the second-layer mixed powder, and the third-layer mixed powder by applying an identical pressure.

### ADVANTAGEOUS EFFECTS OF THE INVENTION

The mixed powder high-density molding method as defined in (1) can reliably and stably produce a high-density green compact while significantly reducing the production cost. It is also possible to minimize (prevent) the amount of basic metal particles removed during the mechanical post-treatment.

According to the mixed powder high-density molding method as defined in (2), since the basic metal particles that differ in particle size are used in combination, the inter-particle bonding force can be further improved as compared with the case of using the basic metal particles having an identical particle size. It is also possible to enhance the selectivity of the mixed powder, reduce the material cost, and facilitate handling.

According to the mixed powder high-density molding method as defined in (3), Intertwinement of the powder within the overlapping range is improved, and the amount of basic metal particles removed during the mechanical post-treatment can be further reduced. This is also effective to prevent occurrence of cracks at the boundary between the layers.

According to the mixed powder high-density molding method as defined in (4), since a large basic metal particle that is easily removed during the mechanical post-treatment due to external force can be eliminated, it is possible to significantly reduce the probability that the basic metal particles included in the first-layer mixed powder and the third-layer mixed powder are removed during the mechanical post-treatment.

The mixed powder high-density molding method as defined in (5) makes it possible to reduce the material cost, and significantly reduce the amount of basic metal particles (particularly basic metal particles situated at the edge) removed during the mechanical post-treatment. This also prevents a deterioration in magnetic properties.

The mixed powder high-density molding method as defined in (6) makes it possible to further enhance the selectivity of the mixed powder, significantly reduce the material cost, and easily obtain the material.

The mixed powder high-density molding method as defined in (7) makes it possible to ensure that the lubricant produces a sufficient lubricating effect during the first press molding step while suppressing oxidation. It is also possible to selectively use a wide variety of lubricants.

The mixed powder high-density molding method as defined in (8) makes it possible to further improve the fluidity of the melted lubricant in all directions during the second press molding step, and significantly reduce the friction resistance between the basic metal particles, and the friction resistance between the basic metal particles and the second die.

The mixed powder high-density molding method as defined in (9) makes it possible to easily implement the press molding step, facilitate handling, and indirectly reduce the green compact production cost.

The mixed powder high-density molding system as defined in (10) can reliably implement the mixed powder high-density molding method as defined in any one of (1) to (9), can be easily implemented, and facilitates handling.

The mixed powder high-density molding system as defined in (11) makes it possible to simplify the system as compared with the configuration as defined in (10). It is also possible to simplify the production line, and further facilitate handling.

The mixed powder high-density molding system as defined in (12) makes it possible to allow the temperature of the mixed powder intermediate compressed body to be within a given temperature range even when the temperature of the mixed powder intermediate compressed body decreases until the final green compact molding start timing occurs, and achieve a good molding effect.

Since the mixed powder high-density molding system as defined in (13) includes the workpiece transfer device, it is possible to reliably transfer the workpiece in the area between the first press molding device and the heating device, the area between the heating device and the second press molding device, and the area between the second press molding device and the discharge section.

The mixed powder high-density molding system as defined in (14) makes it possible to inexpensively provide a mechanical part and a magnetic core material for an electromagnetic device (e.g., motor or transformer) having excellent wear resistance and removal resistance during the mechanical post-treatment performed after the press molding process.

Further features and advantageous effects of the invention will become apparent from the following description.

### BRIEF DESCRIPTION OF DRAWINGS

FIG. 1 is a diagram illustrating a high-density molding method according to one embodiment of the invention.
FIG. 2 is a front view illustrating a high-density molding system according to a first embodiment of the invention, and its operation.
FIG. 3A is a view illustrating a mixed powder high-density molding operation according to the first embodiment of the invention, and illustrates a state in which a mixed powder intermediate compressed body is molded using a first die.
FIG. 3B is a view illustrating a mixed powder high-density molding operation according to the first embodiment of the invention, and illustrates a state in which a first die is filled with a mixed powder.
FIG. 4 is a graph illustrating the relationship between pressure and density obtained at the pressure (first embodiment of the invention), wherein a broken line (characteristics A) indicates a molding state using a first die, and a solid line (characteristics B) indicates a molding state using a second die.
FIG. 5A is an external perspective view illustrating a final green compact (intermediate green compact) according to the first embodiment of the invention having a ring-like shape.
FIG. 5B is an external perspective view illustrating a final green compact (intermediate green compact) according to the first embodiment of the invention having a cylindrical shape.
FIG. 5C is an external perspective view illustrating a final green compact (intermediate green compact) according to the first embodiment of the invention having a narrow round shaft shape.
FIG. 5D is an external perspective view illustrating a final green compact (intermediate green compact) according to the first embodiment of the invention having a disc-like shape.
FIG. 5E is an external perspective view illustrating a final green compact (intermediate green compact) according to the first embodiment of the invention having a complex shape.
FIG. 6 is a view illustrating the order in which a die is filled with a mixed powder (first embodiment).
FIG. 7 is an external perspective view illustrating a high-density three-layer green compact (first embodiment) and a single-layer green compact.
FIG. 8 is a view illustrating removal of a basic metal particle during a mechanical post-treatment (first embodiment).
FIG. 9 is a graph illustrating the average particle size of a mixed powder (first embodiment).
FIG. 10 is an external perspective view illustrating a three-layer green compact used in the example and comparative examples (first embodiment).
FIG. 11 is a graph illustrating the amount of basic metal particles removed (and evaluation) in the example and comparative examples (first embodiment).
FIG. 12 is a front view illustrating a high-density molding system according to a second embodiment of the invention, and its operation.

### DESCRIPTION OF EMBODIMENTS

Exemplary embodiments of the invention are described in detail below with reference to the drawings.

### First embodiment

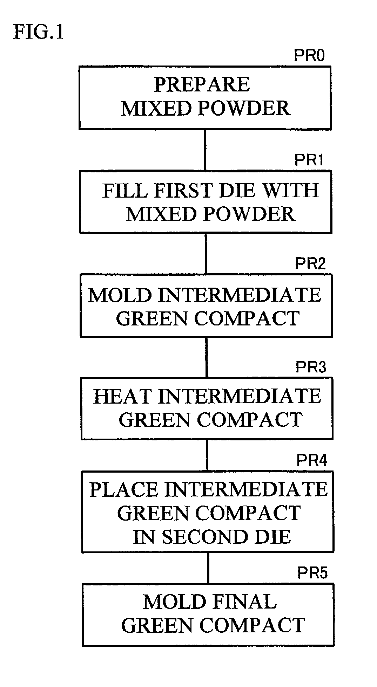

As illustrated in FIGS. 1 to 7, a mixed powder high-density molding system 1 includes a mixed powder feeding device 10, a first press molding device 20, a heating device 30, and a second press molding device 40, and stably and reliably implements a mixed powder high-density molding method that includes a mixed powder-filling step (PR1) that fills a first die (lower die 21) sequentially with a first-layer mixed powder 100F that is a mixture of a basic metal powder having a small particle size and a low-melting-point lubricant powder, a second-layer mixed powder 100S that is a mixture of the basic metal powder having a large particle size and the low-melting-point lubricant powder, and a third-layer mixed powder 100T that is a mixture of the basic metal powder having a small particle size and the low-melting-point lubricant powder, an intermediate green compact-forming step (PR2) that applies a first pressure (P1) to the mixed powder (100F, 100S, 100T) in the first die (lower die 21) to form a mixed powder intermediate compressed body (hereinafter may be referred to as "intermediate green compact 110"), a heating step (PR3) that heats the intermediate green compact 110 removed from the first die (lower die 21) to the melting point of the lubricant powder, a step (PR4) that places the heated intermediate green compact 110 in a second die (lower die 41), and a final green compact-forming step (PR5) that applies a second pressure P2 to the intermediate green compact 110 in the second die (lower die 41) to form a high-density mixed powder final compressed body (hereinafter may be referred to as "final green compact 120"). The mixed powder high-density molding system 1 can produce and provide a high-density three-layer green compact that can endure a mechanical post-treatment.

The mixed powder 100 is a mixture of the basic metal powder and the low-melting-point lubricant powder. The basic metal powder may include only one type of main metal powder, or may be a mixture of one type of main metal powder and one or more types of alloying component powder. The expression "low melting point" used herein in connection with the lubricant powder refers to a temperature (melting point) that is significantly lower than the melting point (temperature) of the basic metal powder, and can significantly suppress oxidation of the basic metal powder.

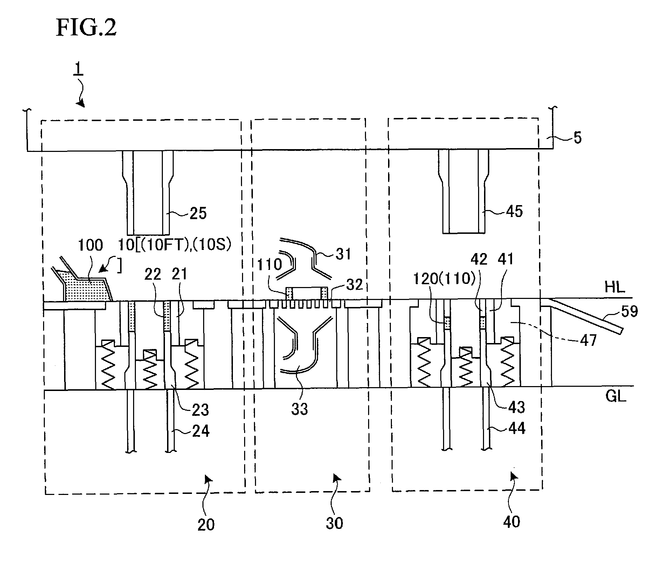

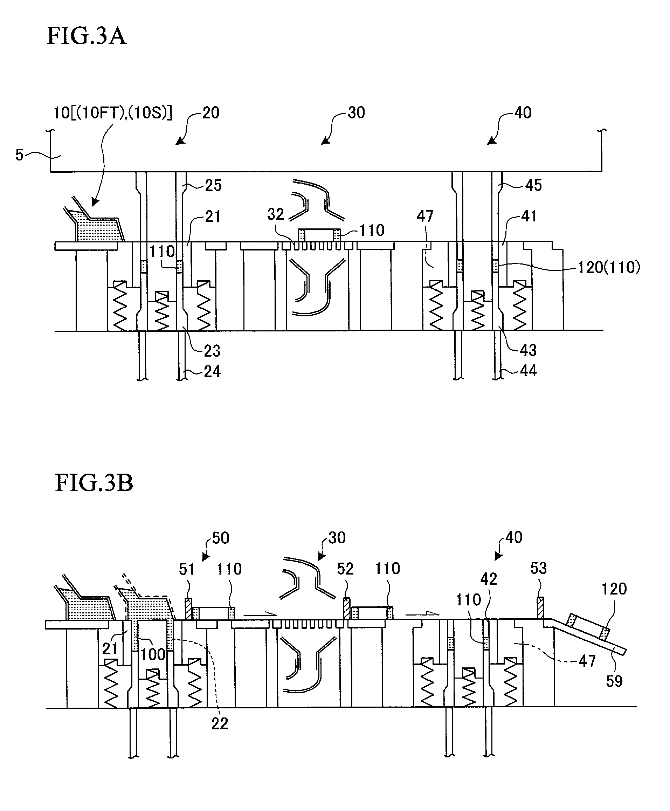

As illustrated in FIG. 2 that shows the high-density molding system 1, the mixed powder feeding device 10 is disposed on the leftmost side (upstream side) of a high-density molding line. The mixed powder feeding device 10 feeds the mixed powder 100 to the first die (lower die 21) included in a first press molding device 20 to fill a cavity 22 of the first die (lower die 21) with the mixed powder 100. The mixed powder feeding device 10 has a function of holding a constant amount of the mixed powder 100, and a function of feeding a constant amount of the mixed powder 100. The mixed powder feeding device 10 can selectively move between the initial position (i.e., the position indicated by the solid line in FIGS. 2 and 3A) and the position over the first die (lower die 21) (i.e., the position indicated by the broken line in FIG. 3B).

Since it is important to uniformly and sufficiently fill the first die (lower die 21) with the mixed powder 100, the mixed powder 100 must be in a dry state. Specifically, since the shape of the internal space (cavity 22) of the first die (lower die 21) corresponds to the shape of the product, it is necessary to uniformly and sufficiently fill the first die with the mixed powder 100 in order to ensure the dimensional accuracy of the intermediate green compact 110, even if the product has a complex shape, or has a narrow part.

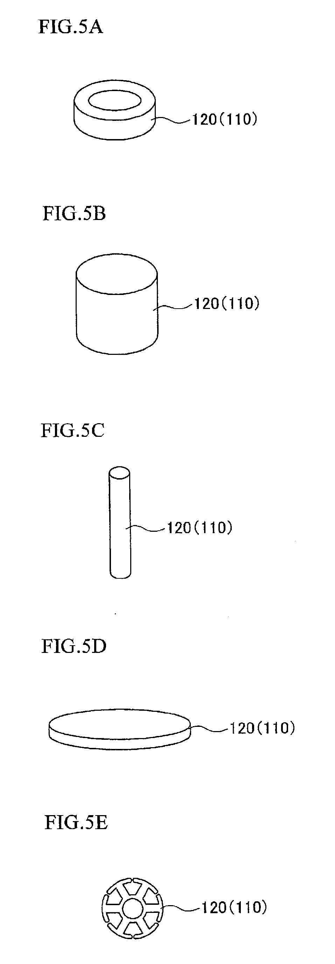

The configuration (dimensions and shape) of the final green compact 120 (intermediate green compact 110) is not particularly limited. FIGS. 5A to 5E illustrate examples of the configuration (dimensions and shape) of the final green compact 120 (intermediate green compact 110). FIG. 5A illustrates the final green compact 120 (intermediate green compact 110) having a ring-like shape, FIG. 5B illustrates the final green compact 120 (intermediate green compact 110) having a cylindrical shape, FIG. 5C illustrates the final green compact 120 (intermediate green compact 110) having a narrow round shaft shape, FIG. 5D illustrates the final green compact 120 (intermediate green compact 110) having a disc-like shape, and FIG. 5E illustrates the final green compact 120 (intermediate green compact 110) having a complex shape.

Specifically, an upper die 25 (upper punch 25PU) and the cavity 22 of the lower die 21 of the first press molding device 20 have a shape corresponding to the configuration (shape) of the intermediate green compact 110. When the intermediate green compact 110 has the configuration (shape) illustrated in FIG. 5A, 5B, 5C, 5D, or 5E, the upper die 25 (upper punch 25PU) and the cavity 22 of the lower die 21 have a shape corresponding to the configuration (shape) of the intermediate green compact 110. When the intermediate green compact 110 has the ring-like shape illustrated in FIG. 5A, the upper die 25 (upper punch 25PU) has a cylindrical shape, and the lower die 21 has a hollow cylindrical shape (see FIGS. 2, 3A, and 3B). When the intermediate green compact 110 has the cylindrical shape illustrated in FIG. 5B, the upper die 25 (upper punch 25PU) has a solid cylindrical shape, and the lower die 21 has a hollow cylindrical shape. This also applies to the case where the intermediate green compact 110 has the narrow round shaft shape illustrated in FIG. 5C, or the disc-like shape illustrated in FIG. 5D (except for the depth). When the intermediate green compact 110 has the complex shape illustrated in FIG. 5E, the upper die 25 (upper punch 25PU) and the lower die 21 have the corresponding complex shape. This also applies to an upper die 45 (upper punch 45PU) and a cavity 42 of a lower die 41 of the second press molding device 40.

A solid lubricant that is in a dry state (fine particulate) (i.e., powdery state) at room temperature is used as the lubricant that is used to reduce the friction resistance between the basic metal particles and the friction resistance between the basic metal powder and the inner side of the die. For example, since the mixed powder 100 exhibits high viscosity and low fluidity when using a liquid lubricant, it is difficult to uniformly and sufficiently fill the first die with the mixed powder 100.

It is also necessary for the lubricant to be solid and stably maintain a given lubricating effect during the intermediate green compact molding step that is performed using the first die (lower die 21) at room temperature while applying the first pressure P1. The lubricant must stably maintain a given lubricating effect even if the temperature has increased to some extent as a result of applying the first pressure P1.

On the other hand, the melting point of the lubricant powder must be significantly lower than the melting point of the basic metal powder from the viewpoint of the relationship with the heating step (PR3) performed after the intermediate green compact molding step, and suppression of oxidation of the basic metal powder.

In the first embodiment, the lubricant powder has a low melting point within the range of 90 to 190°C. The lower-limit temperature (e.g., 90°C) is selected to be higher to some extent than the upper-limit temperature (e.g., 80°C) of a temperature range (e.g., 70 to 80°C) that is not reached even if the temperature has increased to some extent during the intermediate green compact molding step, while taking account of the melting point (e.g., 110°C) of other metallic soaps. This prevents a situation in which the lubricant powder is melted (liquefied) and flows out during the intermediate green compact molding step.

The upper-limit temperature (e.g., 190°C) is selected to be a minimum value from the viewpoint of lubricant powder selectivity, and is selected to be a maximum value from the viewpoint of suppression of oxidation of the basic metal powder during the heating step. Specifically, it should be understood that the lower-limit temperature and the upper-limit temperature of the above temperature range (90 to 190°C) are not threshold values, but are boundary values.

This makes it possible to selectively use an arbitrary metallic soap (e.g., zinc stearate or magnesium stearate) as the lubricant powder. Note that a viscous liquid such as zinc octylate cannot be used since the lubricant must be in a powdery state.

In the first embodiment, a zinc stearate powder having a melting point of 120°C is used as the lubricant powder. Note that the invention does not employ a configuration in which a lubricant having a melting point lower than the die temperature during press molding is used, and the press molding step is performed while melting (liquefying) the lubricant (see Patent Literature 7). If the lubricant is melted and flows out before completion of molding of the intermediate green compact 110, lubrication tends to be insufficient during the molding step, and sufficient press molding cannot be performed reliably and stably.

The lubricant powder is used in an amount that is selected based on an empirical rule determined by experiments and actual production. In the first embodiment, the lubricant powder is used in a ratio of 0.5 to 0.08 wt%, for example, based on the total amount of the mixed power taking account of the relationship with the intermediate green compact-forming step (PR2). When the ratio of the lubricant powder is 0.08 wt% or more, the lubricating effect can be maintained until the intermediate green compact 110 is molded. When the ratio of the lubricant powder is 0.5 wt% or less, the desired compression ratio can be obtained when forming the intermediate green compact 110 from the mixed powder 100.

A practical amount of the lubricant powder must be determined taking account of the true density ratio of the intermediate green compact 110 that is molded in the first die (lower die 21) while applying the first pressure, and a sweating phenomenon that occurs in the second die (lower die 41). It is also necessary to prevent dripping (dripping phenomenon) of the liquefied lubricant from the die toward the outside that causes a deterioration in the work environment. When the true density ratio (i.e., the ratio with respect to the true density (=100%)) of the intermediate green compact 110 is set to 80 to 90%, the ratio of the lubricant powder is preferably set to 0.1 to 0.2 wt%. The upper limit (0.2 wt%) is determined from the viewpoint of preventing the dripping phenomenon, and the lower limit (0.1 wt%) is determined from the viewpoint of ensuring a necessary and sufficient sweating phenomenon. The ratio (amount) of the lubricant powder is equal to or less than half of that of the related-art example (1 wt%), and the industrial applicability can be significantly improved.

It is very important to prevent the dripping phenomenon during actual production. A large amount of lubricant powder tends to be mixed in the planning stage and the research stage in order to prevent a situation in which the lubricant powder runs short from the viewpoint of reducing frictional resistance during pressing. Since whether or not a high density of more than 7.3 g/cm³ can be achieved is determined by trial and error, for example, a situation in which excess lubricant is liquefied and flows out from the die is not taken into consideration. The dripping phenomenon is also not taken into consideration. Since dripping of the liquefied lubricant increases the lubricant cost, decreases productivity due to a deterioration in the work environment, and increases the burden imposed on the workers, it is impossible to ensure practical and widespread use without preventing the dripping phenomenon.

When the intermediate green compact 110 obtained by compressing the mixed powder 100 including 0.2 wt% of the lubricant powder to have a true density ratio of 80% is heated to the melting point of the lubricant powder in the heating step (PR3), the powder lubricant scattered in the intermediate green compact 110 is melted to fill the voids between the metal powder particles, passes through the voids between the metal powder particles, and uniformly exudes through the surface of the intermediate green compact 110. Specifically, the sweating phenomenon occurs. When the intermediate green compact 110 is compressed in the second die (lower die 41) by applying the second pressure P2, the frictional resistance between the basic metal powder and the inner wall of the cavity is significantly reduced.

The sweating phenomenon similarly occurs when using the intermediate green compact 110 obtained by compressing the mixed powder 100 including 0.1 wt% of the lubricant powder to have a true density ratio of 90%, or when using the intermediate green compact 110 obtained by compressing the mixed powder 100 including more than 0.1 wt% and less than 0.2 wt% of the lubricant powder to have a true density ratio of more than 80% and less than 90%. It is also possible to prevent the dripping phenomenon.

This makes it possible to produce a green compact (e.g., magnetic core) that can be molded to have high density, and has sufficient magnetic properties and mechanical strength, and prevent a situation in which the die breaks. Moreover, the consumption of the lubricant can be significantly reduced, and a situation in which the liquid lubricant drips from the die can be prevented, so that a good work environment can be achieved. Since the green compact production cost can be reduced while improving productivity, the industrial applicability can be significantly improved. The amount of the lubricant powder may be appropriately adjusted taking account of the composition of the mixed powder 100, and the like.

Note that Patent Literatures 1 to 8 are silent about the relationship between the lubricant content and the compression ratio of the mixed powder 100, and the dripping phenomenon and the sweating phenomenon that may occur depending on the lubricant content. Patent Literature 5 (warm powder metallurgical technique) discloses producing a primary molded body having a density ratio of less than 76% in order to facilitate handling, and does not disclose technical grounds relating to high-density molding and items that can be implemented. Since the secondary molded body is produced in Patent Literature 5 after breaking the primary molded body, Patent Literature 5 does not employ a technical idea that achieves an increase in density through primary molding and secondary molding.

The first press molding device 20 applies the first pressure P1 to the mixed powder 100 with which the first die (lower die 21) has been filled using the mixed powder feeding device 10, to form the mixed powder intermediate compressed body (intermediate green compact 110). In the first embodiment, the first press molding device 20 has a press structure.

As illustrated in FIG. 2, the first die device includes the lower die 21 (die 21D) that is situated on the side of a bolster, and the upper die 25 (upper punch 25PU) that is situated on the side of a slide 5. The cavity 22 of the lower die 21 has a shape (hollow cylindrical shape) corresponding to the shape (ring-like shape) of the intermediate green compact 110 illustrated in FIG. 5A. Specifically, the upper die 25 (upper punch 25PU) can be pushed into the lower die 21 (cavity 22) (see FIGS. 2, 3A, and 3B (cylindrical shape)), and is moved upward and downward using the slide 5. A movable member 23 is fitted into the lower side of the cavity 22 so that the movable member 23 can move in the vertical direction.

When the intermediate green compact 110 has the shape illustrated in FIG. 5B, 5C, 5D, or 5E, the upper die 25 (upper punch 25PU) and the cavity 22 of the lower die 21 of the first press molding device 20 also have a shape corresponding to the shape of the intermediate green compact 110.

When the intermediate green compact 110 has the cylindrical shape illustrated in FIG. 5B, the upper die 25 (upper punch 25PU) has a solid cylindrical shape, and the lower die 21 has a hollow cylindrical shape. When the intermediate green compact 110 has the circular rod-like shape illustrated in FIG. 5C, the upper die 25 (upper punch 25PU) has a solid cylindrical shape that is long in the vertical direction, and the lower die 21 has a hollow cylindrical shape that is long in the vertical direction. When the intermediate green compact 110 has the cylindrical shape illustrated in FIG. 5D, the upper die 25 (upper punch 25PU) has a solid cylindrical shape that is long in the vertical direction, and the lower die 21 has a hollow cylindrical shape that is long in the vertical direction. When the intermediate green compact 110 has the complex shape illustrated in FIG. 5E, the upper die 25 (upper punch 25PU) and the lower die 21 have the corresponding complex shape. This also applies to the upper die (upper punch) 45 and the cavity 42 of the lower die 41 of the second press molding device 40.

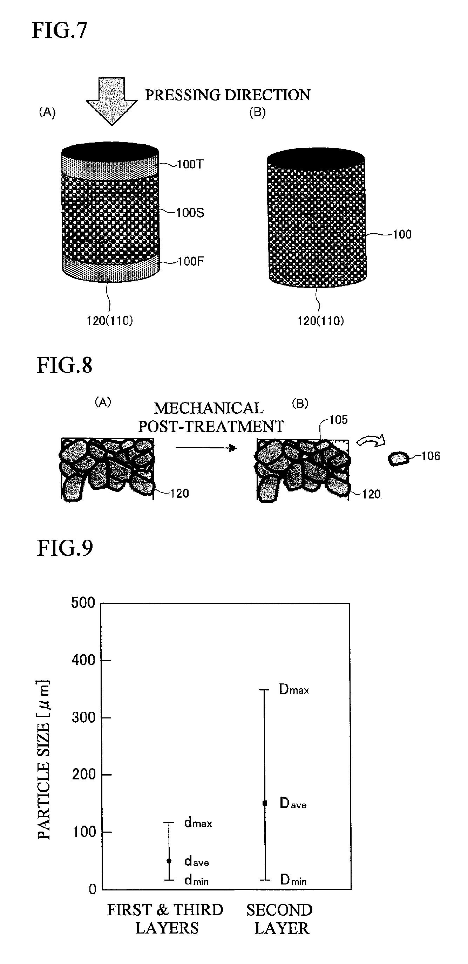

Note that production of the high-density three-layer green compact (final green compact 120) (see (A) in FIG. 7) is described in detail later.

The movable member 23 is moved upward using a knockout pin (not illustrated in the drawings) that moves upward through a through-hole 24 that is formed under a ground level GL. The intermediate green compact 110 in the first die (lower die 21 (cavity 22)) can thus be moved upward to a transfer level HL. The movable member 23 functions as a first ejection device for ejecting the intermediate green compact 110 in the first die (lower die 21) to the outside (transfer level HL). The movable member 23 and the knockout pin are returned to the initial position after the intermediate green compact 110 has been transferred to the heating device 30. Note that the first ejection device may be implemented using another device.

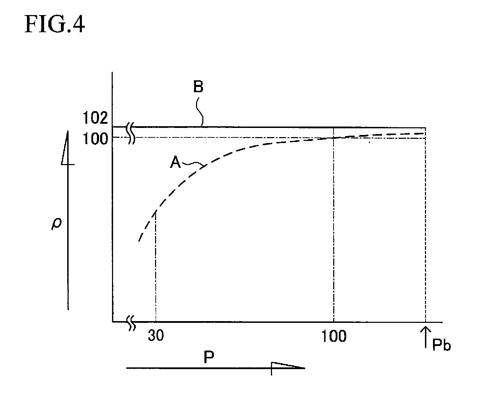

The relationship between the pressure P (first pressure P1) applied by the first press molding device 20 and the true density ratio (density p) of the resulting intermediate green compact 110 is described below with reference to FIG. 4. The horizontal axis indicates the pressure P using an index. In the first embodiment, the maximum capacity (pressure P) is 10 tons/cm² (horizontal axis index: 100). Reference sign Pb indicates the die breakage pressure at which the horizontal axis index is 140 (14 tons/cm²). The vertical axis indicates the true density ratio (density p) using an index. A vertical axis index of 100 corresponds to a true density ratio (density p) of 97% (7.6 g/cm³).

In the first embodiment, the basic metal powder is a magnetic-core vitreous insulating film-coated iron powder (true density: 7.8 g/cm³), the lubricant powder is a zinc stearate powder (0.1 to 0.2 wt%), and the first pressure P1 is selected so that the mixed powder intermediate compressed body can be compressed to have a true density ratio of 80 to 90% corresponding to a vertical axis index of 82 to 92 (corresponding to a density p of 6.24 to 7.02 g/cm³).

A vertical axis index of 102 corresponds to a density p of 7.75 g/cm³ and a true density ratio (density p) of 99%.

Note that the basic metal powder may be a magnetic-core iron-based amorphous powder (magnetic-core Fe-Si alloy powder), a magnetic-core iron-based amorphous powder, a magnetic-core Fe-Si alloy powder, a pure iron powder for producing mechanical parts, or the like.

The density p achieved by the first press molding device 20 increases along the characteristics A indicated by the broken line (curve) as the first pressure P1 increases. The density ρ reaches 7.6 g/cm³ when the horizontal axis index (first pressure is P1) is 100. The true density ratio is 97%. The density ρ increases to only a small extent even if the first pressure P1 is further increased. The die may break if the first pressure P1 is further increased.

When the density ρ achieved by pressing at the maximum capacity of the press molding device (press) is not satisfactory, it has been necessary to provide a larger press. However, the density ρ increases to only a small extent even if the maximum capacity is increased by a factor of 1.5, for example. Therefore, it has been necessary to accept a low density ρ (e.g., 7.5 g/cm³) when using an existing press.

It is possible to achieve a major breakthrough if the vertical axis index can be increased from 100 (7.6 g/cm³) to 102 (7.75 g/cm³) by directly utilizing an existing press. Specifically, it is possible to significantly (hyperbolically) improve magnetic properties, and also significantly improve mechanical strength if the density ρ can be increased by 2%. Moreover, since a sintering process at a high temperature can be made unnecessary, oxidation of the green compact can be significantly suppressed (i.e., a decrease in magnetic core performance can be prevented).

In order to achieve the above breakthrough, the high-density molding system 1 is configured so that the intermediate green compact 110 formed by the first press molding device 20 is heated to promote melting (liquefaction) of the lubricant, and the second press molding device 40 then performs the second press molding process. A high density (7.75 g/cm³) ρ that corresponds to a vertical axis index of 102 (see the characteristics B indicated by the solid line in FIG. 4) can be achieved by pressing the intermediate green compact 110 using the second press molding device 40. The details thereof are described later in connection with the second press molding device 40.

The heating device 30 is a device that heats the mixed powder intermediate compressed body (intermediate green compact 110) removed from the first die (lower die 21) to the melting point of the lubricant powder. As illustrated in FIG. 2, the heating device 30 includes a hot air generator (not illustrated in FIG. 2), a blow hood 31, an exhaust/circulation hood 33, and the like. The heating device 30 blows hot air against the intermediate green compact 110 that is positioned using a wire-mesh holding member 32 to heat the intermediate green compact 110 to the melting point (e.g., 120°C) of the lubricant powder.

The technical significance of the above low-temperature heat treatment is described below in connection with the relationship with the first press molding process. The powder mixture 100 with which the lower die 21 (cavity 22) is filled has an area in which the lubricant powder is relatively thinly present (thin area), and an area in which the lubricant powder is relatively densely present (dense area) in connection with the basic metal powder. The friction resistance between the basic metal particles, and the friction resistance between the basic metal powder and the inner side of the die can be reduced in the dense area. In contrast, the friction resistance between the basic metal particles, and the friction resistance between the basic metal powder and the inner side of the die increase in the thin area.

When the first press molding device 20 applies a pressure to the mixed powder, compressibility is predominant (i.e., compression easily occurs) in the dense area due to low friction. In contrast, compressibility is poor (i.e., compression slowly occurs) in the thin area due to high friction. Therefore, a compression difficulty phenomenon corresponding to the preset first pressure P1 occurs (i.e., compression limit). In this case, when the fracture surface of the intermediate green compact 110 removed from the first die (lower die 21) is magnified, the basic metal powder is integrally pressure-welded in the dense area. However, the lubricant powder is also present in the dense area. In the thin area, small spaces remain in the pressure-welded basic metal powder, and almost no lubricant powder is observed in the thin area.

Therefore, it is possible to form compressible spaces by removing the lubricant powder from the dense area, and improve the compressibility of the thin area by supplying the lubricant to the spaces formed in the thin area.

Specifically, the lubricant powder is melted (liquefied), and increased in fluidity by heating the intermediate green compact 110 subjected to the first press molding process to the melting point (e.g., 120°C) of the lubricant powder. The lubricant that flows out from the dense area penetrates through the peripheral area, and is supplied to the thin area. This makes it possible to reduce the friction resistance between the basic metal particles, and compress the spaces that have been occupied by the lubricant powder. It is also possible to reduce the friction resistance between the basic metal powder and the inner side of the die. Specifically, the second press molding process is performed utilizing the fluidity of the liquid lubricant.

The second press molding device 40 is a device that applies the second pressure P2 to the heated intermediate green compact 110 placed in the second die (lower die 41) to form the high-density final green compact 120.

In the first embodiment, a function of pre-heating the second die (lower die 41) is provided. Note that the high-density molding method according to the invention can be implemented without pre-heating the second die (lower die 41) as long as the temperature of the heated intermediate green compact 110 is within a given temperature range in which no problem occurs until the final green compact molding start timing at which the second pressure P2 is applied.

However, when the heat capacity of the intermediate green compact 110 is small, or when it takes time to transfer the intermediate green compact 110 to the second die (lower die 41), or the intermediate green compact 110 is transferred to the second die (lower die 41) along a long transfer path, or when the temperature of the heated intermediate green compact 110 decreases until the final green compact molding start timing occurs due to the composition of the mixed powder 100, the configuration (shape) of the intermediate green compact 110, or the like, a preferable molding effect can be obtained by pre-heating the second die (lower die 41). A second pre-heating device 47 (described later) is provided to pre-heat the second die (lower die 41).

In the first embodiment, the maximum capacity (pressure P) of the second press molding device 40 is the same as that (10 tons/cm²) of the first press molding device 20. The first press molding device 20 and the second press molding device 40 are configured as a single press, and the upper die 25 and the upper die 45 are moved upward and downward in synchronization using the common slide 5 illustrated in FIG. 2. The above configuration is economical, and can reduce the production cost of the final green compact 120.

As illustrated in FIG. 2, the second die device includes the lower die 41 (die 41D) that is situated on the side of the bolster, and the upper die 45 (upper punch 45PU) that is situated on the side of the slide 5. The lower part of the cavity 42 of the lower die 41 has a shape (cylindrical shape) corresponding to the shape (ring-like shape) of the final green compact 120, and the upper part of the cavity 42 has a slightly larger shape so that the intermediate green compact 110 can be placed therein. The upper die 45 can be pushed into the lower die 41 (cavity 42), and is moved upward and downward using the slide 5. A movable member 43 is fitted into the lower side of the cavity 42 so that the movable member 43 can move in the vertical direction. Note that the second die (lower die 41) and the first die (lower die 21) are adjusted in height (position) corresponding to the vertical difference in dimensions between the compression targets (intermediate green compact 110 and final green compact 120).

The movable member 43 is moved upward using a knockout pin (not illustrated in the drawings) that moves upward through a through-hole 44 that is formed under the ground level GL. The final green compact 120 in the second die (lower die 41 (cavity 42)) can thus be moved upward to the transfer level HL. The movable member 43 functions as a second ejection device for ejecting the final green compact 120 in the second die (lower die 41) to the outside (transfer level HL). Note that the second ejection device may be implemented using another device. The movable member 43 and the knockout pin are returned to the initial position after the final green compact 120 has been discharged to a discharge chute 59, and a new intermediate green compact 110 has been received from the heating device 30.

The second die (lower die 41 (cavity 42)) is provided with the per-heating device 47 that can be changed in heating temperature. The pre-heating device 47 heats (pre-heats) the second die (lower die 41 (cavity 42)) to the melting point (120°C) of the lubricant powder (zinc stearate) before the intermediate green compact 110 is placed in the second die (lower die 41 (cavity 42)). Therefore, the heated intermediate green compact 110 can be placed in the second die (lower die 41 (cavity 42)) without allowing the intermediate green compact 110 to cool. This makes it possible to ensure a lubricating effect while preventing a situation in which the lubricant that has been melted (liquefied) is solidified. In the first embodiment, the second pre-heating device 47 is implemented using an electric heating system (electric heater). Note that the second pre-heating device 47 may also be implemented using a hot oil/hot water circulation heating device or the like.

The second pre-heating device 47 can heat the second die until the final green compact 120 is obtained. Therefore, the fluidity of the melted lubricant in all directions can be further improved during press molding, and the friction resistance between the particles and the friction resistance between the basic metal particles and the second die (lower die 41 (cavity 42)) can be significantly reduced.

In the first embodiment, a function of pre-heating the first die (lower die 21) is also provided (not illustrated in the drawings). Note that the high-density molding method according to the invention can be implemented without pre-heating the intermediate green compact 110 by pre-heating the first die (lower die 21) before the heating step.

However, when the composition of the mixed powder 100 or the configuration (shape) of the intermediate green compact 110 is unique, or when the heat capacity of the intermediate green compact 110 is large, or when it is difficult to provide a large heating device 30, or when the temperature of the work environment is low, it may take time to heat the intermediate green compact 110. In such a case, it is desirable to pre-heat the first die (lower die 21). In the first embodiment, the first die is pre-heated for the above reason.

Specifically, a first pre-heating device (not illustrated in the drawings) that can be adjusted in heating temperature is provided to the first die (lower die 21 (cavity 22)), and the first die (lower die 21) is pre-heated after the intermediate green compact 110 has been obtained, but before the intermediate green compact 110 is transferred to the heating device 30 to pre-heat the lubricant powder. This makes it possible to reduce the heating time, and reduce the production cycle.

The density ρ achieved by the second press molding device 40 has the characteristics B indicated by the solid line (straight line) in FIG. 4. Specifically, the density ρ does not gradually increase as the second pressure P2 increases, differing from the case of using the first press molding device 20 (see the characteristics A (broken line)). More specifically, the density ρ does not increase until the final first pressure P1 (e.g., horizontal axis index: 50, 75, or 85) during the first press molding step is exceeded. The density ρ increases rapidly when the second pressure P2 has exceeded the final first pressure P1. This means that the second press molding step is performed continuously with the first press molding step.

Therefore, the first press molding step need not be performed in a state in which the first pressure P1 is necessarily increased to a value (horizontal axis index: 100) corresponding to the maximum capacity. This makes it possible to prevent unnecessary time and energy consumption that may occur when the first press molding step is continued after the compression limit has been reached. Therefore, the production cost can be reduced. Moreover, since it is possible to avoid overloaded operation in which the horizontal axis index exceeds 100, breakage of the die does not occur. This makes it possible to ensure easy and stable operation.

A workpiece transfer device 50 can transfer the intermediate green compact 110 removed from the first die (lower die 21) using the first ejection device (movable member 23 and through-hole 24) to a given position within the heating device 30, can transfer the heated intermediate green compact 110 from a given position within the heating device 30 to the second die 41 (lower die 41), and can transfer the final green compact 120 removed from the second die 41 (lower die 41) using the second ejection device (movable member 43 and through-hole 44) to a discharge section (e.g., discharge chute 59) that discharges the final green compact 120 to the outside of the high-density molding system 1. The workpiece transfer device 50 can reliably transfer the workpiece in the area between the first press molding device 20 and the heating device 30, the area between the heating device 30 and the second press molding device 40, and the area between the second press molding device 40 and the discharge chute 59.

In the first embodiment, the workpiece transfer device 50 is formed by three transfer bars 51, 52, and 53 (see FIG. 3B) that are operated in synchronization. The transfer bars 51, 52, and 53 are moved to the front transfer line (FIG. 3B) from the deep side in FIG. 3A when a transfer request has been issued, moved from left to right, and then returned to the original position. A placement device (transfer bar 52, movable member 43, and through-hole 44) places the heated mixed powder intermediate compressed body (intermediate green compact 110) in the second die (lower die 41 (cavity 42)) that is pre-heated to the melting point of the lubricant powder.

Note that the workpiece transfer device may be implemented by a transfer device that includes a finger that is driven in two-dimensional or three-dimensional directions, and the like, and sequentially transfers the workpiece to each die or the like.

Commercialization technical features that implement an improvement in industrial applicability and widespread use of the final green compact 120 that can be molded by only the press molding process are described below.

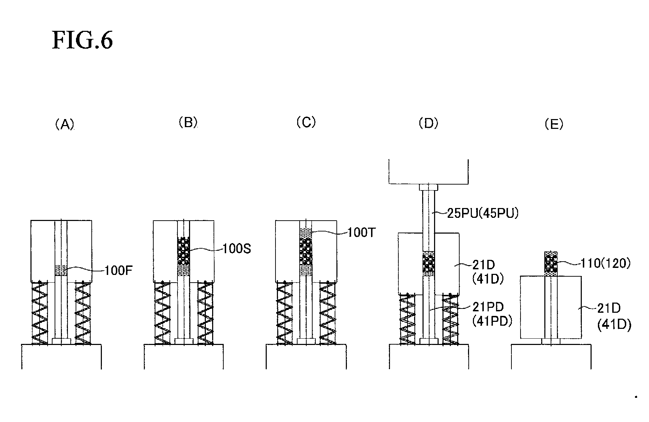

An example of producing the high-density three-layer green compact (final green compact 120) (see (A) in FIG. 7) is described later. The basic configuration and function of the high-density molding system 1 are the same as those described above (FIGS. 2, 3A, and 3B), but the first die and the second die are replaced. Specifically, the upper die 25 (upper punch 25PU) included in the first press molding device 20 has a solid cylindrical shape, and the lower die 21 included in the first press molding device 20 has a hollow cylindrical shape in the same manner as in the case of molding the cylindrical green compact illustrated in FIG. 5B. More specifically, the first die is designed so that the upper punch 25PU has a cylindrical shape, the die 21D has a hollow cylindrical shape, and the lower punch 21PD has a cylindrical shape (see (D) in FIG. 6). The second press molding device 40 is designed so that the upper punch 45PU has a cylindrical shape, the die 41D has a hollow cylindrical shape, and the lower punch 41PD has a cylindrical shape.

Since the outer circumferential surface of the final green compact 120 molded by only the press molding process comes in sliding contact with the inner wall of the cavity during the molding process, the outer circumferential surface of the final green compact 120 is smooth. However, since the upper side and the lower side of the final green compact 120 are merely pressed by the end face of the punch 25PU and the end face of the punch 21PD, the upper side and the lower side of the final green compact 120 are relatively rough. Therefore, a mechanical post-treatment is required to obtain the end product (e.g., magnetic core). The mechanical post-treatment may be deburring or chamfering that removes part of the surface of the final green compact.

If the surface of the final green compact is removed to a large extent, it is a waste of the material. Moreover, assembly is hindered if the outer diameter varies due to the mechanical post-treatment. If removal of the particles or deformation (i.e., defects) has occurred, the yield decreases.

Deburring or the like is normally performed using a polishing/grinding sheet. Specifically, the worker presses the polishing/grinding sheet against the upper side and the lower side of the final green compact 120, and applies a removal force while relativity moving the polishing/grinding sheet in an arbitrary direction. Therefore, an external force in an arbitrary direction at an arbitrary strength is applied to the final green compact 120. The final green compact 120 has a configuration in which the basic metal particles are intertwined and bonded through the lubricant film (adhesive). Therefore, the bonding force between the basic metal particles in the final green compact 120 is weak as compared with the bonding force of the sintered green compact obtained by a high-temperature heat treatment (sintering process) wherein the basic metal particles are melted and bonded again.

The basic metal particles that are situated inside the final green compact 120 and adjacent to each other in the vertical direction and the horizontal direction are intertwined and bonded. However, the basic metal particles that are situated on the upper side of the final green compact 120 shows low bonding force since the basic metal particles are not adjacent to other basic metal particles on the upper side and the left side (or the right side). The basic metal particles that are situated on the lower side of the final green compact 120 shows low bonding force since the basic metal particles are not adjacent to other basic metal particles on the lower side and the left side (or the right side). Specifically, the bonding force between the basic metal particles situated at the edge (upper side, lower side, and corner) of the final green compact 120 is lower than the bonding force between the basic metal particles situated inside the final green compact 120.

Deburring or chamfering removes the basic metal particles instead of reducing the particle size of the basic metal particles. Therefore, when the final green compact 120 having a single-layer structure (see (B) in FIG. 7 and (A) in FIG. 8) is subjected to the mechanical post-treatment, a basic metal particle 106 (see (B) in FIG. 8) among basic metal particles 105 that is situated at the edge of the final green compact 120 is removed. In this case, the final green compact 120 is deformed. The basic metal particles 105 that are situated inside the final green compact 120 are not removed.

Removal of the basic metal particle 106 due to deburring or chamfering occurs irrespective of the type of polishing/grinding tool (e.g., sheet, file, or grinder), and the type of operation (i.e., manual operation or automated operation).

When the second pressure P2 is constant, the bonding area with the adjacent particles increases as the particle size of the basic metal particles of the final green compact 120 decreases, and decreases as the particle size of the basic metal particles of the final green compact 120 increases. It is considered that the external force moment applied to the bonding area of the particles increases in proportion to the particle size. Specifically, the resistance to the external force is high when the particle size of the basic metal particles of the final green compact 120 is small, and is low when the particle size of the basic metal particles of the final green compact 120 is large.

It is considered that the basic metal powder that includes a plurality of basic metal particles that differ in particle size shows a higher degree of intertwinement as compared with the basic metal powder that includes only the basic metal particles having an identical particle size (single-particle powder).

Specifically, it is important to determine the particle configuration of the final green compact 120 in order to minimize the amount of basic metal particles removed during the mechanical post-treatment.

In the embodiments of the invention, the final green compact 120 is provided with a three-layer structure (see (A) in FIG. 7) in order to minimize the amount of basic metal particles removed during the mechanical post-treatment. Specifically, the first layer (lower layer) is formed using the mixed powder 100F that includes the basic metal powder having a small particle size as the main component, the second layer (middle layer) is formed using the mixed powder 100S that includes the basic metal powder having a large particle size as the main component, and the third layer (upper layer) is formed using the mixed powder 100T that includes the basic metal powder having a small particle size as the main component.

The particle size of the basic metal powder refers to the particle size of the basic metal particles included in the basic metal powder. When the basic metal particle has a spherical shape, the particle size refers to the diameter of the basic metal particle. When the basic metal particle has a shape other than a spherical shape or a round shape, the particle size refers to the maximum length of the basic metal particle.

When molding the high-density three-layer green compact, it is necessary to fill the first die (die 21D) sequentially with the first-layer mixed powder 100F having a small particle size, the second-layer mixed powder 100S having a large particle size, and the third-layer mixed powder 100T having a small particle size (see (A) to (C) in FIG. 6). In the first embodiment, since the first-layer mixed powder 100F and the third-layer mixed powder 100T have an identical particle size (details thereof are described later), two mixed powder feeding devices (small-particle-size mixed powder feeding device 10FT and large-particle-size mixed powder feeding device 10S) illustrated in FIGS. 2, 3A, and 3B are provided, and selectively used. Note that three mixed powder feeding devices may be provided corresponding to each layer.

The particle size of the basic metal particles included in the first-layer mixed powder 100F, the second-layer mixed powder 100S, and the third-layer mixed powder 100T is specified using an average particle size from the viewpoint of improving intertwinement of the basic metal particles. This is also convenient from the viewpoint of purchase of the mixed powder, and handling during the filling operation and the like. For example, the particle size of the small-particle-size mixed powder that includes the maximum particle size dmax, the minimum particle size dmin, and a number of intermediate particle sizes is specified by the average particle size dave, and the particle size of the large-particle-size mixed powder that includes the maximum particle size Dmax, the minimum particle size Dmin, and a number of intermediate particle sizes is specified by the average particle size Dave (see FIG. 9).

Specifically, when the average particle size of the basic metal particles of the first-layer mixed powder 100F and the third-layer mixed powder 100T is reduced, the edge of the green compact is formed by the basic metal powder having a small average particle size, and only powder particles having a small particle size are removed during the mechanical post-treatment. This makes it possible to reduce the amount of basic metal particles removed during the mechanical post-treatment. Note that the material cost increases as the average particle size decreases.

The maximum particle size dmax of the basic metal powder included in the first-layer mixed powder 100F, and the maximum particle size dmax of the basic metal powder included in the third-layer mixed powder 100T are set to be larger than the minimum particle size Dmin of the basic metal powder included in the second-layer mixed powder 100S (see FIG. 9). For example, the average particle size of the first-layer mixed powder 100F is set to be 40 micrometers, the average particle size of the second-layer mixed powder 100S is set to be 200 micrometers, and the average particle size of the third-layer mixed powder 100T is set to be 50 micrometers.

Specifically, the particle size of the basic metal particles included in the first-layer mixed powder 100F and the third-layer mixed powder 100T overlaps the particle size of the basic metal particles included in the second-layer mixed powder 100S within a specific range. Therefore, intertwinement of the powder is improved due to the presence of the basic metal particles that differ in particle size, and the amount of basic metal particles removed during the mechanical post-treatment can be further reduced. This is also effective to prevent occurrence of cracks at the boundary between the layers.

The maximum particle size dmax of the basic metal powder included in the first-layer mixed powder 100F and the maximum particle size dmax of the basic metal powder included in the third-layer mixed powder 100T are set to be smaller than the average particle size Dave of the basic metal powder included in the second-layer mixed powder 100S. The average particle size can be reduced even when large particles are present. The probability that a large particle is situated at the edge of the green compact is low. However, there is a possibility that a large particle is situated at the edge of the green compact. When a large particle is situated at the edge of the green compact, the large particle is easily removed as compared with small particles situated around the large particle. In order to prevent a situation in which such a large particle is mixed, the particle size is determined so that "dmax<Dave" is satisfied.

According to this configuration, the average particle size of the basic metal powder that includes the basic metal particles that differ in particle size within the overlapping range can be further reduced, and a large particle can be eliminated. Therefore, intertwinement of the powder can be further improved, and the bonding force can be increased. This makes it possible to further reduce the amount of basic metal particles removed during the mechanical post-treatment.

The particle size of the first-layer mixed powder 100F is selected from 20 to 120 micrometers, the particle size of the second-layer mixed powder 100S (basic metal particles) is selected from 20 to 400 micrometers, and the particle size of the third-layer mixed powder 100T (basic metal particles) is selected from 20 to 120 micrometers, taking account of the overall configuration. If the minimum particle size of each mixed powder is 20 micrometers or less, the raw material powder production cost increases. If the maximum particle size of the first-layer mixed powder 100F and the third-layer mixed powder 100T exceeds 120 micrometers, the amount of particles removed during the mechanical post-treatment increases due to external force. If the maximum particle size of the second-layer mixed powder 100S exceeds 400 micrometers, the magnetic properties of the green compact deteriorate.

Specifically, it is possible to reduce the raw material powder production cost, reduce the amount of particles removed during the mechanical post-treatment, and ensure sufficient magnetic properties when the first-layer mixed powder 100F and the third-layer mixed powder 100T include the basic metal powder having a particle size selected from 20 to 120 micrometers, and the second-layer mixed powder 100S includes the basic metal powder having a particle size selected from 20 to 400 micrometers.

When it is not particularly desired to cause the upper side and the lower side of the final green compact 120 to differ in properties (e.g., mechanical strength), it is advantageous to use an identical mixed power as the first-layer mixed powder 100F and the third-layer mixed powder 100T. It is not normally desired to cause the upper side and the lower side of the final green compact 120 to differ in properties. In the first embodiment, the basic metal particles included in the first-layer mixed powder 100F and the basic metal particles included in the third-layer mixed powder 100T have an identical average particle size (e.g., 50 micrometers). This makes it possible to enhance the selectivity of the mixed powder, and significantly reduce the material cost.

Note that it is possible to easily produce the final green compact 120 wherein the upper side and the lower side differ in properties (e.g., mechanical strength) when the final green compact 120 is a three-layer green compact. The three-layer green compact has a high utility value.

It is preferable to fill the first die (lower die 21) with the first-layer mixed powder 100F and the third-layer mixed powder 100T to a thickness of 0.5 mm, for example, from the viewpoint of convenience. If the first die (lower die 21) is filled with the first-layer mixed powder 100F and the third-layer mixed powder 100T to a thickness of less than 0.5 mm, a variation in thickness may increase, and molding failure may occur.

Since the relatively long center layer (second layer) is formed of the mixed powder having a large particle size, and the first-layer mixed powder 100F and the third-layer mixed powder 100T have a small particle size, it is possible to ensure excellent overall compressibility, significantly reduce the amount of particles removed due to the mechanical post-treatment, and provide the final green compact 120 having an excellent upper surface and an excellent lower surface.

Note that it is preferable to fill the first die (lower die 21) with the first-layer mixed powder 100F and the third-layer mixed powder 100T to a thickness equal to or less than 10% of the total thickness of the first-layer mixed powder 100F, the second-layer mixed powder 100S, and the third-layer mixed powder 100T. If the first die (lower die 21) is filled with the first-layer mixed powder 100F and the third-layer mixed powder 100T to a thickness of more than 10% of the total thickness of the first-layer mixed powder 100F, the second-layer mixed powder 100S, and the third-layer mixed powder 100T, the thickness of the second-layer mixed powder 100S may be insufficient, and the compression efficiency may decrease.

The mixed powder high-density molding system according to the first embodiment implements the high-density molding method as described below.

### <Preparation 1 of mixed powder>

The basic metal powder (magnetic-core vitreous insulating film-coated iron powder) and the lubricant powder (zinc stearate powder) (0.2 wt%) are mixed to prepare the mixed powder 100 in a dry state. A given amount of the mixed powder 100 is fed to the mixed powder feeding device 10 (step PR0 in FIG. 1).

### <Preparation 1 of mixed powder>

When molding a three-layer green compact, a small-particle-size mixed powder having an average particle size of 60 micrometers, and a large-particle-size mixed powder having an average particle size of 120 micrometers are provided. The small-particle-size mixed powder is fed to the mixed powder feeding device 10FT, and the large-particle-size mixed powder is fed to the mixed powder feeding device 10S.

### <Filling 1 with mixed powder>

The mixed powder feeding device 10 is moved from a given position (indicated by the solid line in FIG. 3B) to a supply position (indicated by the broken line in FIG. 3B) at a given timing. The inlet of the mixed powder feeding device 10 is opened, and the empty lower die 21 (cavity 22) of the first press molding device 20 is filled with the mixed powder 100 (step PR1 in FIG. 1). The lower die 21 (cavity 22) can be filled with the mixed powder 100 within 2 seconds, for example. The inlet is closed after the lower die 21 (22) has been filled with the mixed powder 100, and the mixed powder feeding device 10 is returned to the given position (indicated by the solid line in FIG. 3B).

### <Filling 2 with mixed powder>

When molding the high-density three-layer green compact, the lower die 21 (cavity 22) is sequentially filled with the first-layer mixed powder 100F (average particle size: 60 micrometers), the second-layer mixed powder 100S (average particle size: 120 micrometers), and the third-layer mixed powder 100T (average particle size: 60 micrometers) (see (A) to (C) in FIG. 6). The first-layer mixed powder 100F and the third-layer mixed powder 100T are fed from the mixed powder feeding device 10FT (see FIG. 2), and the second-layer mixed powder 100S is fed from the mixed powder feeding device 10S (see FIG. 2).

### <Molding 1 of intermediate green compact>

The upper die 25 of the first press molding device 20 is moved downward using the slide 5 illustrated in FIG. 2, and applies the first pressure P1 to the mixed powder 100 in the lower die 21 (cavity 22) (first press molding process). The solid lubricant produces a sufficient lubricating effect. The density ρ of the compressed intermediate green compact 110 increases along the characteristics A (solid line) illustrated in FIG. 4. When the first pressure P1 has reached a pressure (3.0 tons/cm²) corresponding to a horizontal axis index of 30, for example, the true density ratio increases to 85% (i.e., the density ρ increases to 6.63 g/cm³) (vertical axis index: 87). The press molding process is performed for 8 seconds, for example, to obtain the intermediate green compact 110 that has been molded in the die (lower die 21) (see FIG. 3A) (step PR2 in FIG. 1). The intermediate green compact 110 having the ring-like shape illustrated in FIG. 5A can be molded. The one-layer intermediate green compact 110 having the cylindrical shape (see (B) in FIG. 7) can be molded by exchanging the die. The upper die 25 is then moved upward using the slide 5. Note that the second press molding process on the preceding intermediate green compact 110 is performed by the second press molding device 40 in synchronization with the above operation.

### <Molding 2 of intermediate green compact>

When molding the high-density three-layer green compact, the second pressure P2 is applied to the first-layer mixed powder 100F, the second-layer mixed powder 100S, and the third-layer mixed powder 100T sequentially placed in the die (see (A) to (C) in FIG. 6) (see (D) in FIG. 6). The three-layer green compact (intermediate green compact) having the cylindrical shape (see (E) in FIG. 6 and (A) in FIG. 7) can thus be molded.

### <Removal of intermediate green compact>

The first ejection device (movable member 23) moves the intermediate green compact 110 upward to the transfer level HL. Specifically, the intermediate green compact 110 is removed from the lower die 21. The workpiece transfer device 50 transfers the intermediate green compact 110 to the heating device 30 using the transfer bar 51 (see FIG. 3B), and the movable member 23 is returned to the initial position. The intermediate green compact 110 that has been transferred to the heating device 30 is positioned on the wire-mesh holding member 32 (see FIG. 3A).

### <Heating>

The heating device 30 starts to operate (see FIG. 3A). Hot air is blown against the intermediate green compact 110 from the blow hood 31, so that the intermediate green compact 110 is heated to the melting point (e.g., 120°C) of the lubricant powder (step PR3 in FIG. 1). Specifically, the lubricant is melted, and the distribution of the lubricant in the intermediate green compact 110 becomes uniform. The heating time is 8 to 10 seconds, for example. Note that the hot air is recycled through the wire-mesh holding member 32 and the exhaust/circulation hood 33. This also applies to the case of molding the three-layer green compact.

### <Placement of heated intermediate green compact>

The heated intermediate green compact 110 is transferred to the second press molding device 40 by the workpiece transfer device 50 (transfer bar 52) (see FIG. 3B), positioned over the lower die 41, and placed on the movable member 43 in the lower die 41 (cavity 42) (step PR4 in FIG. 1). When molding the three-layer green compact, the intermediate green compact is placed as illustrated in (D) in FIG. 6. In this case, the upper punch 45PU is used as the upper die 45, the die 41D and the lower punch 41PD are used as the lower die 41.

### <Pre-heating of die>

The second pre-heating device 47 operates in the second press molding device 40 (optional). The second pre-heating device 47 heats the second die (lower die 41 (cavity 42)) to the melting point (e.g., 120°C) of the lubricant powder before the intermediate green compact 110 is placed in the second die (lower die 41 (cavity 42)). This makes it possible to prevent solidification of the lubricant included in the heated intermediate green compact 110 placed in the second die (lower die 41 (cavity 42)). This also applies to the case of molding the three-layer green compact.

### <Molding 1 of final green compact>

The upper die 45 is moved downward using the slide 5 illustrated in FIG. 2 (see FIG. 3A), and applies the second pressure P2 to the intermediate green compact 110 in the lower die 41 (cavity 42). The liquid lubricant produces a sufficient lubricating effect. The sweating phenomenon in which the lubricant flows in all directions occurs during the press molding process. It is also possible to efficiently reduce the friction resistance between the basic metal particles and the friction resistance between the basic metal particles and the die. The density ρ of the compressed intermediate green compact 110 increases along the characteristics B illustrated in FIG. 4. Specifically, when the second pressure P2 has exceeded a horizontal axis index of 30 (3.0 tons/cm²), for example, the density ρ rapidly increases from 6.63 g/cm³ to a value (7.75 g/cm³) corresponding to a vertical axis index of 102. When the second pressure P2 is increased to a horizontal axis index of 100 (10 tons/cm²), the density ρ (7.75 g/cm³) becomes uniform over the entire green compact. The second press molding process is performed for 8 seconds, for example, to obtain the final green compact 120 that has been molded in the second die (lower die 41) (step PR5 in FIG. 1). The final green compact 120 illustrated in (B) in FIG. 7 is molded in the same manner as described above. The upper die 45 is then moved upward using the slide 5. Note that the first press molding process on the subsequent intermediate green compact 110 is performed by the first press molding device 20 in synchronization with the above operation.

### <Molding 2 of final green compact>

The high-density three-layer green compact (see (A) in FIG. 7) can be molded using the upper punch 45PU, the die 41D, and the lower punch 41PD (see (D) in FIG. 6).

### <Removal of product>

The second ejection device (movable member 43) moves the final green compact 120 upward to the transfer level HL. Specifically, the final green compact 120 is removed from the lower die 41. The workpiece transfer device 50 transfers the final green compact 120 to the discharge chute 59 using the transfer bar 53 (see FIG. 3B), and the movable member 43 is returned to the initial position. The vitreous material included in the final green compact 120 having a density ρ of 7.75 g/cm³ corresponding to a vertical axis index of 102 is not modified/melted since the melting point of the lubricant powder was low. Therefore, a high-quality magnetic-core green compact that can reduce eddy current loss and improve magnetic flux density can be efficiently produced. This also applies to the case of molding the high-density three-layer green compact (see (E) in FIG. 6).

### <Production cycle>

According to the high-density molding method, since the first press molding process, the heating process, and the second press molding process can be performed in synchronization on the metal powder 100 (mixed powder 100) that is sequentially fed, the high-density green compact (final green compact 120) can be produced in a cycle time of 12 to 14 seconds (i.e., maximum heating time (e.g., 10 seconds) + workpiece transfer time (e.g., 2 to 4 seconds)). This makes it possible to remarkably reduce the production time as compared with the related-art example (high-temperature sintering time: 30 minutes or more). For example, it is possible to ensure a stable supply of automotive parts that have a reduced size and weight, a complex shape, and high mechanical strength, or electromagnetic device parts that exhibit excellent magnetic properties and mechanical strength, and significantly reduce the production cost.

### <Deburring>

The high-density three-layer green compact (final green compact 120) (see (A) in FIG. 7) removed in (E) in FIG. 6 is subjected to the mechanical post-treatment. Since the first layer and the third layer are formed using the mixed powders 100F and 100T having a small average particle size, removal of the basic metal particle 106 (see (B) in FIG. 8) does not occur, and the high-density three-layer green compact (final green compact 120) having the desired shape can be efficiently produced, as compared with the case of molding the entire green compact using a single-layer mixed powder having a large average particle size (see (B) in FIG. 7). It is also possible to reduce the mechanical post-treatment time, and significantly reduce the amount of particles removed due to the mechanical post-treatment. The final green compact can be used directly as a mechanical part.

### Examples

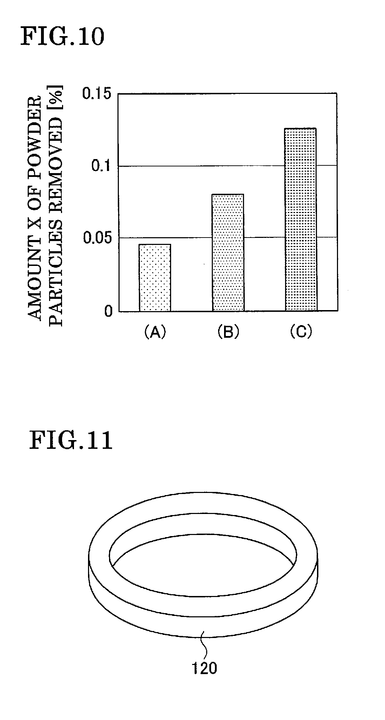

A final green compact 120 having the ring-like shape illustrated in FIG. 11 (outer diameter: 50 mm, inner diameter: 40 mm, thickness: 5 mm) was molded. The ring-like shape was selected since the amount of particles removed during the mechanical post-treatment increases as compared with the cylindrical shape illustrated in (A) in FIG. 7. Somaloy 110i (manufactured by Höganäs) was used as the first-layer mixed powder 100F and the third-layer mixed powder 100T. The basic metal powder is a magnetic-core vitreous insulating film iron powder, and the lubricant content was 0.5 wt%. The basic metal powder had a particle size of 20 to 100 micrometers and an average particle size of 50 micrometers. Somaloy 700 (manufactured by Höganäs) was used as the second-layer mixed powder 100S. The basic metal powder is a magnetic-core vitreous insulating film iron powder, and the lubricant content was 0.4 wt%. The basic metal powder had a particle size of 80 to 400 micrometers and an average particle size of 200 micrometers. The cavity 22 of the first die (lower die 21) was sequentially filled with the first-layer mixed powder 100F, the second-layer mixed powder 100S, and the third-layer mixed powder 100T. The first-layer mixed powder 100F and the third-layer mixed powder 100T were placed to a thickness of more than 0.5 mm. The first-layer mixed powder 100F, the second-layer mixed powder 100S, and the third-layer mixed powder 100T were compressed by applying the first pressure P1 (10 tons/cm²) to form an intermediate green compact 110. The intermediate green compact 110 was heated to 130°C (i.e., the melting point of the lubricant), and compressed by applying the second pressure P2 (10 tons/cm²) to form a final green compact 120 (high-density three-layer green compact) having a high density of 7.75 g/cm³. The high-density three-layer green compact was deburred by horizontally sliding each side of the high-density three-layer green compact on #800 emery paper placed on a platen, and it was determined that the high-density three-layer green compact was completely deburred when the scriber was not caught in the same direction. The amount of basic metal particles removed was calculated by the expression "Amount (%) of basic metal particles removed = [(Waf - Wbf) / Wbf] × 100", and found to be 0.048% (see (A) in FIG. 10). Note that Waf is the weight of the green compact before deburring, and Wbf is the weight of the green compact after deburring.

### <Comparative Example 1>

A single-layer green compact having the ring-like shape illustrated in FIG. 11 was molded. Somaloy 700 (manufactured by Höganäs) was used as the mixed powder. The basic metal powder is a magnetic-core vitreous insulating film iron powder, and the lubricant content was 0.4 wt%. The basic metal powder had a particle size of 80 to 400 micrometers and an average particle size of 200 micrometers. Specifically, the second-layer mixed powder 100S used in the example was used as the mixed powder. The remaining conditions (i.e., the shape and the dimensions of the green compact, the first pressure, the heating temperature, and the second pressure) were the same as in the example. A final green compact 120 (high-density single-layer green compact) having a high density of 7.75 g/cm³ was thus obtained. The high-density single-layer green compact was deburrred in the same manner as in the example. The amount of basic metal particles removed (as calculated by the above expression) was 0.115% (see (C) in FIG. 10).

### <Comparative Example 2>

A two-layer green compact having the ring-like shape illustrated in FIG. 11 was molded. The die was filled sequentially with the second-layer mixed powder 100S and the third-layer mixed powder 100T used in the example. The remaining conditions (i.e., each mixed powder, the shape and the dimensions of the green compact, the first pressure, the heating temperature, and the second pressure) were the same as in the example. A final green compact (high-density two-layer green compact) having a high density of 7.75 g/cm³ was thus obtained. The high-density two-layer green compact was deburrred in the same manner as in the example. The amount of basic metal particles removed (as calculated by the above expression) was 0.078% (see (B) in FIG. 10).

### <Evaluation>

When the amount (0.115%) of basic metal particles removed in Comparative Example 1 (single-layer structure) is referred to as "100", the amount of basic metal particles removed in the example (three-layer structure) was "42". Specifically, the amount of basic metal particles removed could be reduced by 58% (=[(0.115-0.048)/0.115]×100) as compared with the single-layer structure. The amount of basic metal particles removed in Comparative Example 2 (two-layer structure) was "68". Since the lower side was formed using the second-layer mixed powder 100S having a large particle size, the amount of basic metal particles removed could be reduced by only 32% (=[(0.115-0.078)/0.115]×100). It was thus confirmed by the amount of basic metal particles removed could be very efficiently reduced by employing the three-layer structure.

The high-density molding method according to the first embodiment can reliably and stably produce a high-density green compact while significantly reducing the production cost by filling the first die (lower die 21 (die 21D)) sequentially with the first-layer mixed powder 100F that includes the basic metal powder (mixed powder 100) having a small particle size, the second-layer mixed powder 100S that includes the basic metal powder (mixed powder 100) having a large particle size, and the third-layer mixed powder 100T that includes the basic metal powder (mixed powder 100) having a small particle size, applying the first pressure P1 to the first-layer mixed powder 100F, the second-layer mixed powder 100S, and the third-layer mixed powder 100T to form the intermediate green compact 110, heating the intermediate green compact 110 to the melting point (e.g., 120°C) of the lubricant powder, placing the heated intermediate green compact 110 in the second die (lower die 41), and applying the second pressure P2 to the intermediate green compact 110 in the second die (lower die 41) to form the final green compact 120. It is also possible to minimize (prevent) the amount of basic metal particles removed during the mechanical post-treatment. This makes it possible to inexpensively provide a high-quality green compact.

Since a sintering process that is performed at a high temperature for a long time can be made unnecessary, oxidation of the green compacts 110 and 120 can be significantly suppressed while minimizing energy consumption, and significantly reducing the production cost. This is advantageous from the viewpoint of environmental protection.

Since the particle size of the basic metal particles included in the mixed powder 100F, the mixed powder 100S, and the mixed powder 100T is specified by the average particle size, the inter-particle bonding force can be further improved as compared with the case of using the basic metal particles having an identical particle size. Since the basic metal particles that differ in particle size are used in combination, it is possible to enhance the selectivity of the mixed powder, further reduce the material cost, and facilitate handling.

Since the maximum particle size of the basic metal powder included in the first-layer mixed powder 100F and the third-layer mixed powder 100T is larger than the minimum particle size of the basic metal powder included in the second-layer mixed powder 100S, it is possible to improve intertwinement of the powder within the overlapping range. This makes it possible to further reduce the amount of basic metal particles removed during the mechanical post-treatment. This is also effective to prevent occurrence of cracks at the boundary between the layers.

The first-layer mixed powder 100F and the third-layer mixed powder 100T do not include particles having a particle size that is larger than the average particle size of the second-layer mixed powder 100S. Specifically, since the maximum particle size of the first-layer mixed powder 100F and the third-layer mixed powder 100T is smaller than the average particle size of the second-layer mixed powder 100S, it is possible to eliminate a large basic metal particle that is easily removed during the mechanical post-treatment due to external force. This makes it possible to significantly reduce the probability that the basic metal particles included in the first-layer mixed powder 100F and the third-layer mixed powder 100T are removed during the mechanical post-treatment.

Since the particle size of the particles included in the first-layer mixed powder 100F and the third-layer mixed powder 100T is selected from 20 to 120 micrometers, and the particle size of the particles included in the second-layer mixed powder 100S is selected from 20 to 400 micrometers, it is possible to significantly reduce the material cost, and significantly reduce the amount of particles removed from each side during the mechanical post-treatment. This also prevents a deterioration in magnetic properties.

Since the particles included in the first-layer mixed powder 100F and the third-layer mixed powder 100T have an identical particle size, it is possible to further enhance the selectivity of the mixed powder, significantly reduce the material cost, and easily obtain the material.

Since the lubricant powder has a low melting point within the range of 90 to 190°C, it is possible to suppress oxidation of the lubricant during the first press molding step while ensuring a sufficient lubricating effect. It is also possible to selectively use a wide variety of lubricants.

Since the second die (lower die 41) can be pre-heated using the second pre-heating device 47, it is possible to further improve the fluidity of the lubricant in all directions during the second press molding step. This makes it possible to significantly reduce the friction resistance between the basic metal particles, and the friction resistance between the particles and the second die. In other words, the smooth liquid lubricant ensures fluidity, and better molding effects can be obtained.

Since the second pressure P2 is set to be equal to the first pressure P1, it is possible to easily implement the press molding step, facilitate handling, indirectly reduce the green compact production cost, and easily implement the system based on a single press, for example.

The high-density molding method according to the first embodiment can efficiently and stably produce a magnetic core part that exhibits excellent magnetic properties corresponding to the type of basic metal powder, using a magnetic-core vitreous insulating film-coated iron powder, a magnetic-core iron-based amorphous powder, or a magnetic-core Fe-Si alloy powder as the basic metal powder.

The high-density molding system 1 that includes the mixed powder feeding device 10, the first press molding device 20, the heating device 30, and the second press molding device 40 can reliably and stably implement the high-density molding method. The high-density molding system 1 can be easily implemented, and facilitates handling.

Since the heating device 30 and the second press molding device 40 are formed by the heating/press molding device 70, the heating/press molding device includes a plurality of heating/press molding sub-devices, and each heating/press molding sub-device can be selectively and sequentially operated in each cycle, the system configuration can be further simplified. It is also possible to simplify the production line, and further facilitate handling.

Since the high-density (7.75 g/cm³ or more) three-layer green compact (final green compact 120) is produced by sequentially placing the first-layer mixed powder 100F having a small average particle size, the second-layer mixed powder 100S having a large average particle size, and the third-layer mixed powder 100T having a small average particle size, and applying pressure to the first-layer mixed powder 100F, the second-layer mixed powder 100S, and the third-layer mixed powder 100T, it is possible to inexpensively provide a mechanical part and a magnetic core material for an electromagnetic device (e.g., motor or transformer) having excellent wear resistance and removal resistance during the mechanical post-treatment performed after the press molding process.

The high-density molding method according to the first embodiment can efficiently and stably produce a magnetic core part that exhibits excellent magnetic properties corresponding to the type of basic metal powder, using a magnetic-core vitreous insulating film-coated iron powder, a magnetic-core iron-based amorphous powder, or a magnetic-core Fe-Si alloy powder as the basic metal powder.

It has been impossible to achieve a density equal to or higher than that corresponding to a vertical axis index of 100, taking account of the capacity (horizontal axis index=100 (see FIG. 4)) of a related-art system (e.g., press). According to the first embodiment, however, it is possible to achieve a density equal to or higher than that corresponding to a vertical axis index of 102 using an identical (existing) system. This fact achieves a major breakthrough in the technical field.

### Second embodiment

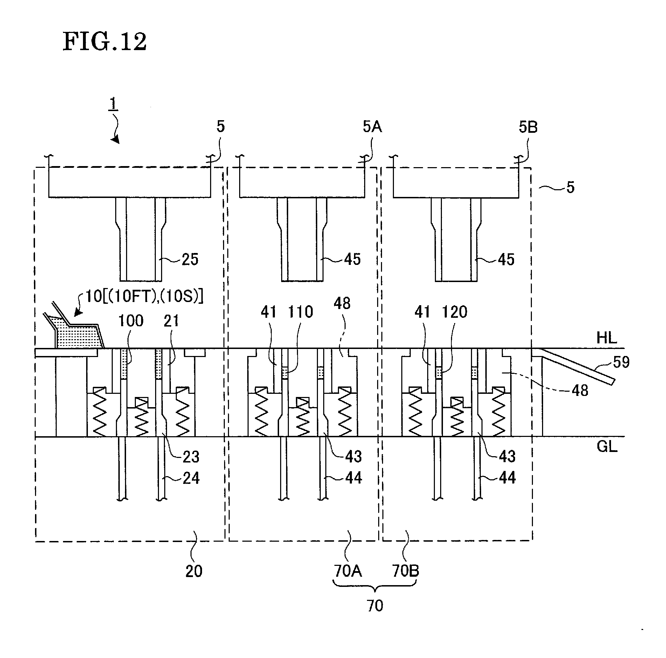

FIG. 12 illustrates a second embodiment of the invention. The second embodiment is identical with the first embodiment as to the mixed powder feeding device 10 and the first press molding device 20, but differs from the first embodiment in that the heating device 30 and the second press molding device 40 are integrally formed.

Specifically, a high-density molding system according to the second embodiment includes a heating/press molding device 70 that has the function of the heating device 30 and the function of the second press molding device 40 (see the first embodiment). The heating/press molding device 70 includes a plurality of (e.g., two) heating/press molding sub-devices 70A and 70B. The heating/press molding sub-devices 70A and 70B are selectively (sequentially) operated by a control device (not illustrated in the drawings) in a production cycle.

The heating/press molding sub-devices 70A and 70B have a basic structure similar to that of the second press molding device 40 described above in connection with the first embodiment. Each of the heating/press molding sub-devices 70A and 70B includes a hybrid heating device 48 having the functions of the heating device 30 and the second pre-heating device 47 described above in connection with the first embodiment.

Specifically, the hybrid heating device 48 is an electric heating device having a heating temperature switch function. The hybrid heating device 48 can pre-heat the lower die 41 to the melting point (e.g., 120°C) of the lubricant in advance (i.e., before the intermediate green compact 110 is placed in the lower die 41). When the intermediate green compact 110 has been placed in the lower die 41, the amount of heat is changed so that the entire intermediate green compact 110 can be heated to the melting point (e.g., 120°C) of the lubricant. The heating target area can also be selected (changed). After completion of the heating process, the second press molding process is performed using the second press molding device 40 in the same manner as described above in connection with the first embodiment. The hybrid heating device 48 can maintain the intermediate green compact 110 at a temperature equal to or higher than the melting point (e.g., 120°C) of the lubricant during the second press molding process.

As illustrated in FIG. 12, each heating/press molding sub-device (20, 70A, 70B) has an independent press structure, and each slide (5, 5A, 5B) is independently moved upward and downward by controlling the rotation of each motor. Specifically, when one of the heating/press molding sub-devices 70A and 70B performs the press molding operation, the other of the heating/press molding sub-devices 70A and 70B performs the pre-heating operation, and does not perform the press molding operation. This also applies to the case where the heating/press molding device 70 is implemented by three or more heating/press molding sub-devices taking account of the production cycle time.

In the second embodiment, when the third intermediate green compact 110 is press-molded in the first press molding device 20, the second intermediate green compact 110 is heated by the heating/press molding sub-device 70A (or the heating/press molding sub-device 70B), and the first intermediate green compact 110 is press-molded by the heating/press molding sub-device 70B (or the heating/press molding sub-device 70A) to form the final green compact 120.

According to the second embodiment, since the heating/press molding device 70 is implemented by a plurality of heating/press molding sub-devices 70A and 70B having an identical structure, the system can be simplified as compared with the first embodiment. It is also possible to simplify the production line, and further facilitate handling.

It is possible to produce a high-density three-layer green compact in the same manner as in the first embodiment (see FIGS. 6 to 9) by replacing the first die and the second die corresponding to the configuration of the intermediate green compact 110 and the final green compact 120.

Note that the first press molding device 20 and the heating/press molding sub-device 70A (or the heating/press molding sub-device 70B), or the first press molding device 20 and the heating/press molding sub-devices 70A and 70B may be implemented by a single press structure.

### REFERENCE SIGNS LIST

- 1: High-density molding system
- 10 (10FT, 10S): Mixed powder feeding device
- 20: First press molding device
- 30: Heating device
- 40: Second press molding device
- 47: First pre-heating device
- 48: Hybrid heating device
- 50: Workpiece transfer device
- 70: Heating/press molding device
- 70A, 70B: Heating/press molding sub-device
- 100: Mixed powder
- 110: Intermediate green compact (mixed powder intermediate compressed body)
- 110F, 110S, 110T: First-layer mixed powder, second-layer mixed powder, and third-layer mixed powder
- 105: Basic metal particle
- 106: Removed particle
- 120: Final green compact (mixed powder final compressed body, high-density three-layer green compact)

## Claims

1. A mixed powder high-density molding method comprising:
filling a first die sequentially with a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder;
applying a first pressure to the third-layer mixed powder, the second-layer mixed powder, and the first-layer mixed powder in the first die to form a mixed powder intermediate compressed body;
heating the mixed powder intermediate compressed body removed from the first die to a melting point of the lubricant powder;
placing the heated mixed powder intermediate compressed body in a second die; and
applying a second pressure to the mixed powder intermediate compressed body in the second die to form a high-density mixed powder final compressed body.

2. The mixed powder high-density molding method as defined in claim 1,
wherein the particle size of the basic metal powder included in the first-layer mixed powder, the second-layer mixed powder, and the third-layer mixed powder is specified by an average particle size.

3. The mixed powder high-density molding method as defined in claim 2,
wherein a maximum particle size of the basic metal powder included in the first-layer mixed powder and a maximum particle size of the basic metal powder included in the third-layer mixed powder are larger than a minimum particle size of the basic metal powder included in the second-layer mixed powder.

4. The mixed powder high-density molding method as defined in claim 3,
wherein the maximum particle size of the basic metal powder included in the first-layer mixed powder and the maximum particle size of the basic metal powder included in the third-layer mixed powder are smaller than the average particle size of the basic metal powder included in the second-layer mixed powder.

5. The mixed powder high-density molding method as defined in claim 1 or 2,
wherein the first-layer mixed powder and the third-layer mixed powder include the basic metal powder having a particle size selected from 20 to 120 micrometers, and the second-layer mixed powder includes the basic metal powder having a particle size selected from 20 to 400 micrometers.

6. The mixed powder high-density molding method as defined in claim 1 or 2,
wherein the first-layer mixed powder and the third-layer mixed powder are an identical mixed powder.

7. The mixed powder high-density molding method as defined in claim 1 or 2,
wherein the lubricant powder has a low melting point within a range of 90 to 190°C.

8. The mixed powder high-density molding method as defined in claim 1 or 2,
wherein the second die is pre-heated to the melting point before the mixed powder intermediate compressed body is placed in the second die.

9. The mixed powder high-density molding method as defined in claim 1 or 2,
wherein the second pressure is selected to be equal to the first pressure.

10. A mixed powder high-density molding system comprising:
a mixed powder feeding device that can externally and sequentially feed a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder;
a first press molding device that applies a first pressure to the first-layer mixed powder, the second-layer mixed powder, and the third-layer mixed powder, with which a first die has been filled using the mixed powder feeding device, to form a mixed powder intermediate compressed body;
a heating device that heats the mixed powder intermediate compressed body removed from the first die to a melting point of the lubricant powder; and
a second press molding device that applies a second pressure to the mixed powder intermediate compressed body that is placed in a second die to form a high-density mixed powder final compressed body.

11. The mixed powder high-density molding system as defined in claim 10,
wherein the heating device and the second press molding device are formed by a heating/press molding device that functions as the heating device and the second press molding device, the heating/press molding device includes a plurality of heating/press molding sub-devices, and each of the plurality of heating/press molding sub-devices can be selectively and sequentially operated in each cycle.

12. The mixed powder high-density molding system as defined in claim 10, further comprising:
a pre-heating device that pre-heats the second die.

13. The mixed powder high-density molding system as defined in claim 10, further comprising:
a workpiece transfer device that transfers the mixed powder intermediate compressed body formed by the first press molding device to the heating device, transfers the mixed powder intermediate compressed body heated by the heating device to the second press molding device, and transfers the mixed powder final compressed body formed by the second press molding device to a discharge section.

14. A high-density three-layer green compact produced by sequentially placing a first-layer mixed powder that is a mixture of a basic metal powder having a small particle size and a low-melting-point lubricant powder, a second-layer mixed powder that is a mixture of the basic metal powder having a large particle size and the low-melting-point lubricant powder, and a third-layer mixed powder that is a mixture of the basic metal powder having a small particle size and the low-melting-point lubricant powder, and integrally molding the first-layer mixed powder, the second-layer mixed powder, and the third-layer mixed powder by applying an identical pressure.
